## Europäisches Patentamt

## European Patent Office

## Office européen des brevets

(11) Veröffentlichungsnummer: **0 533 850 B1**

(19)

(12) # EUROPÄISCHE PATENTSCHRIFT

(45) Veröffentlichungstag der Patentschrift: **18.01.95**

(51) Int. Cl.⁶: **B24D 3/28**, B24D 3/34

(21) Anmeldenummer: **91920994.0**

(22) Anmeldetag: **06.05.91**

(86) Internationale Anmeldenummer:
**PCT/EP91/00850**

(87) Internationale Veröffentlichungsnummer:
**WO 91/17866 (28.11.91 91/27)**

(54) **BINDEMITTELGEMISCH.**

(30) Priorität: **15.05.90 DE 4015440**

(43) Veröffentlichungstag der Anmeldung:
**31.03.93 Patentblatt 93/13**

(45) Bekanntmachung des Hinweises auf die
Patenterteilung:
**18.01.95 Patentblatt 95/03**

(84) Benannte Vertragsstaaten:
**AT BE CH DE DK ES FR GB GR IT LI LU NL SE**

(56) Entgegenhaltungen:
**EP-A- 0 248 980**
**FR-A- 2 329 630**
**US-A- 3 510 283**

**SOVIET INVENTIONS ILLUSTRATED SECTION CH, WEEK C 42, 26 November 1980 DERWENT PUBLICATIONS LTD. LONDON GB CLASS L, Page 6, no. 74693 & SU.A.718457 (TOMSK POLY.) 29-2-1980**

(73) Patentinhaber: **RÜTGERSWERKE AKTIENGE-SELLSCHAFT**
**Mainzer Landstrasse 217,**
**Postfach 11 15 41**
**D-60050 Frankfurt (DE)**

(72) Erfinder: **GARDZIELLA, Arno**
**Rüdinghauser Berg 4**
**D-5810 Witten-Rüdinghausen (DE)**
Erfinder: **SCHWIEGER, Karl-Heinz**
**An der Stennert 43**
**D-5860 Iserlohn (DE)**
Erfinder: **ADOLPHS, Peter**
**Tellenkamp 2**
**D-5750 Menden-Halingen (DE)**
Erfinder: **SUREN, Josef**
**Kirchweg 23**
**D-4798 Wünnenberg Haaren (DE)**
Erfinder: **MEIER, Bertold**
**Christine-Koch-Str. 11**
**D-5750 Menden (DE)**

PATENT ABSTRACT OF JAPAN vol. 8, No. 98 (C-221) (1535) 9 May 1984 & JP-A-59 12 921 (MITSUI TOATSU KAGAKU K.K.) 23 January 1984

PATENT ABSTRACT OF JAPAN, vol. 8, No. 98 (C-221)(1535) 9 May 1984 & JP-A-59 12 920 (MITSUI TOATSU KAGAKU K.K.) 23 January 1984

**Beschreibung**

Die Erfindung betrifft ein kohlenstoffbildendes Bindemittelgemisch zur Herstellung hochtemperaturbeständiger Formstoffe wie feuerfeste Erzeugnisse und Kohlenstoffwerkstoffe, Schleifscheiben und Reibbelägen.

Feuerfeste Erzeugnisse können nach ihrer chemischen Zusammensetzung, ihrer Form sowie nach Herstellungsverfahren unterschieden werden. Nach der ISO-Norm 1109/78 unterteilt man die feuerfesten Erzeugnisse chemisch in tonerdereiche Erzeugnisse, Schamotteerzeugnisse, Tondinas-Erzeugnisse, Silica-Erzeugnisse, basische Erzeugnisse und Sondererzeugnisse, z. B. Kohlenstoffwerkstoffe, Zirkonsilikat, Nitride, Boride, Spinelle. Zu ihrer weiteren Unterteilung werden feuerfeste Baustoffe als geformte, z. B. Steine, oder ungeformte Produkte, z. B. Mörtel, Stampfmassen, Spritzmassen, unterschieden.

Die ISO-Norm 2246 beschreibt eine Unterscheidung nach Herstellungsverfahren, denen Bindungsarten zugeordnet sind. Bei Temperaturen unterhalb 150 °C können z. B. Ton, Wasserglas, Zement oder organische Binder, wie Melasse, Ligninsulfonat, Teer und Pech oder synthetische Harze als Bindemittel verwendet werden. Die Bindung für Produkte, die bei 150 bis 800 °C wärmebehandelt werden, kann ebenfalls anorganisch-chemisch (Phosphate, Sulfate), hydraulisch (Zement) oder organisch kohlenstoffbildend ( z. B. Teer, Pech, synthetisches Harz) erfolgen.

Die Herstellung heißgepreßter Schleifscheiben erfolgt bisher unter Verwendung von Furfurol oder anderen flüssigen Substanzen als Schleifkorn-Benetzungsmittel, welche nur unvollständig in der Lage sind, den hohen Füllstoffanteil, welcher an das Schleifkorn gebunden werden soll, aufzunehmen und liefert deshalb sehr stark staubende und instabile Formstoffmischungen. Gesucht werden Möglichkeiten, stabile, lagerfähige Formstoffmischungen als Granulate herzustellen.

Die Herstellung von Reibbelagsmischungen erfolgt entweder nach einem Trockenmischverfahren durch Einmischen von pulverförmigen Bindemitteln in ein Füllstoff-Fasergemisch oder durch Naßaufbereitung unter Verwendung von wäßrigen Flüssigharzen oder lösemittelhaltigen Harzlösungen mit anschließender Trocknung. Unzureichend ist in vielen Fällen, insbesondere bei Verarbeitung asbestfreier Belagsmischungen, eine ausreichende Faser- und Füllstoffbenetzung und -haftung. Außerdem treten starke Staubprobleme beim Trockenmischverfahren auf.

Während man früher im Bereich kohlenstoffbildender Bindemittel, z. B. zur Erzielung einer besonders guten Verschlackungsbeständigkeit, hauptsächlich Teere bzw. Peche als Ausgangsmaterial für eine gute Kohlenstoffbildung verwendet hat, richtet sich gegenwärtig die Aufmerksamkeit auf die Verwendung härtbarer synthetischer Harze, speziell Furan- und Phenolharze, als Rohstoffe, die bei hohen Temperaturen zu keiner oder sehr geringer Rauch- und Rußentwicklung führen und gleichzeitig die Qualität und die Verarbeitbarkeit der Feuerfestmassen verbessern, jedoch recht teuer sind.

Aus EP 248 980 A1 sind Bindemittel für hochtemperaturbeständige Formstoffe bekannt, bestehend aus einem solchen Phenolharz mit einem molaren Verhältnis an Phenol und Formaldehyd von 1 : 0,2 bis 1 : 0,55.

Nach DE-PS 27 23 792, DE-OS 36 20 473 und EP 249 959 A1 sind auch phenolstämmige Bindemittel bekannt, bei denen 3 bis 30 Gew.-% Rückstände aus der Dimethylterephthalat-Herstellung eingesetzt werden können.

Nachteilig wirkt sich jedoch bei diesen Produkten ihre hohe Viskosität aus. Durch Zusatz von Lösemitteln oder Ölen läßt sie sich zwar erniedrigen, so daß das Bindemittel in einem günstigen Temperaturbereich unter 100 °C verarbeitet werden kann. Beim Erhitzen werden diese flüchtigen, geruchsintensiven Bestandteile aber zum Teil wieder freigesetzt und dadurch können Rauch und Rußbildung verursacht werden.

Es ist daher Aufgabe der Erfindung, zur Herstellung geformter und ungeformter hochtemperaturbeständiger Formstoffe sowie zur Herstellung von Kohlenstoffwerkstoffen gleichermaßen geeignete, unter den üblichen Bedingungen einsetzbare, preisgünstige Bindemittel bereitzustellen, die ohne Lösemittel- oder Ölzusatz aufgrund ihres Eigenschaftsprofils einerseits eine gute Verarbeitbarkeit zeigen, andererseits aber auch bei hohen Temperaturen gute Kohlenstoffbildner sind.

Die Lösung der Aufgabe erfolgt durch die Herstellung und Verwendung erfindungsgemäßer Bindmittel gemäß den Ansprüchen 1 bis 19.

Überraschenderweise wurde gefunden, daß sich kostengünstige Bindemittel mit verbesserten Eigenschaften für hochtemperaturbeständige Formstoffe herstellen lassen, wenn harzartige Rückstände aus der Bisphenol-A-Herstellung mit einem Phenolharz vermischt werden. Diese Bindemittelgemische enthalten mindestens 10 Gew.-% Phenolharz.

Die zur Herstellung dieses Bindemittelgemischs einsetzbaren Bisphenol-A-Rückstände, die bisher schwierig einer sinnvollen Verwendung zugeführt werden konnten, und größtenteils entsorgt werden mußten, sind harzartige Nebenprodukte, die bei der Herstellung von Bisphenol-A durch Kondensation von 2

3

Mol Phenol mit 1 Mol Aceton anfallen und nach der Abtrennung des Bisphenol-A als Rückstand verbleiben, unabhängig von der Art des bei der Kondensation verwendeten Katalysators und der Art der Reinigung des Bisphenol-A.

Mit dem Rückstand der Bisphenol-A-Synthese steht daher also ein preiswerter Rohstoff mit vorteilhaften Eigenschaften zur Herstellung des erfindungsgemäßen Bindemittels zur Verfügung.

Die im Bindemittelgemisch erfindungsgemäß einzusetzenden Phenolharze werden erhalten durch Kondensation einer phenolischen Komponente mit einem Aldehyd, vorzugsweise Formaldehyd, oder einer unter Kondensationsbedingungen im sauren Milieu Aldehyd abspaltenden Verbindung. Als Phenolkomponente dient Phenol selbst oder dessen alkylsubstituierte Homologe, wie o-, m- oder p-Kresol, höher alkylierte Phenole, aber auch Kresole, Xylenole, längerkettige Alkylphenole, außerdem halogensubstituierte Phenole, wie Chlor- oder Bromphenole, oder mehrwertige Phenole, wie Resorcin oder Brenzkatechin. Es kommen aber auch mehrkernige Phenole, wie die verschiedenen Naphthole, 4,4-Dihydroxydiphenylmethan, 2,2-Bis(4-hydroxyphenyl)propan und Gemische der genannten Phenolkomponenten in Frage.

Das molare Verhältnis von Phenolkomponente zu Aldehyd liegt im Bereich von 1 : 0,2 bis 1 : 0,55, vorzugsweise bei 1 : 0,25 bis 0,4. Bei einem molaren Phenol-Aldehyd-Verhältnis im Bereich von 1 : 0,2 bis 1 : 0,55 werden niedrigschmelzende Novolake erhalten, welche dann in Kombination mit dem Bisphenol-A-Rückstand als Schmelze bei einer Temperatur von unter 100 °C verarbeitet werden können.

Höhermolekulare Novolake, die bei einem molaren Verhältnis von 1 : 0,7 bis 1 : 0,9 erhalten werden, lassen sich in der Schmelze mit dem Bisphenol-A-Rückstand vermischen. Nach dem Erkalten und Erhärten läßt sich das so gewonnene Produkt gemeinsam mit einem Härter vermahlen und als Pulver weiterverwenden.

Als Härter können Methylengruppen liefernde Verbindungen wie z. B. Paraformaldehyd oder Hexamethylentetramin verwendet werden.

Die erfindungsgemäßen Bindemittel können mit 1 bis 20 Gew.-% Härter, bevorzugt 5 bis 15 % Hexamethylentetramin, vernetzt werden.

Bei der Herstellung von Feuerfestmassen mit Hilfe des Warmmischverfahrens bei etwa 80 bis 120 °C wirkt sich eine hohe Viskosität des Bindemittels nachteilig auf die Mischbarkeit mit den mineralischen Stoffen aus. Liegt sie jedoch zu niedrig, reicht die Klebkraft des Bindemittels nicht mehr aus.

Rückstände aus der Dimethylterephthalat-Herstellung zeigen erst bei etwa 125 bis 130 °C eine ausreichend niedrige Viskosität, bei der sie mit den zu bindenden Materialien vermischt werden können. Bei diesen Temperaturen wird jedoch bereits der zugesetzte Härter wirksam.

Die Ausgangsviskosität vom Bisphenol-A-Rückstand ist dagegen um Zehnerpotenzen niedriger als z. B. die Viskosität der Rückstände aus der Dimethylterephthalat-Herstellung. Deshalb ist es möglich aus Bisphenol-A-Rückstand, ggf. mit wesentlich höheren Mengenanteilen, und niedrigschmelzenden Phenolnovolaken ganz ohne Zusatz von Lösemitteln geeignete Bindemittel herzustellen.

Rückstände aus der Bisphenol-A-Synthese ergeben je nach ihrer Ausgangsviskosität im Rahmen von 5.000 bis 50.000 mPa•s bei 75 °C in Kombination mit den niedrigschmelzenden Novolaken im Molverhältnis Phenol : Formaldehyd 1 : 0,2 bis 1 : 0,55 Verarbeitungsviskositäten, die auf dem Niveau dieser Novolake oder niedriger liegen. Deshalb lassen sich solche Bindemittelgemische bei Temperaturen unter 100 °C verarbeiten, also bei Temperaturen, bei denen der übliche Härter Hexamethylentetramin noch nicht reagiert.

Überraschenderweise wurde festgestellt, daß Abmischungen von Bisphenol-A-Rückständen mit niedrigschmelzenden Novolaken obiger Zusammensetzung auch bei höheren Mengenanteilen an Bisphenol-A-Rückständen bis zu 90 % ein dem reinen Novolak vergleichbares Ausgangsfestigkeitsniveau an Prüfkörpern auf Dolomitbasis liefern. Bei Anteilen an Bisphenol-A-Rückständen bis zu 50 % im erfindungsgemäßen Bindemittelgemisch kann das Ausgangsniveau der Festigkeit des reinen Novolaks noch verbessert und der Hydratationsschutz und die Festigkeitssteigerung in den ersten 7 Tagen leicht erhöht werden oder vergleichbar bleiben.

Erst bei längeren Lagerzeiten als 7 Tage bei höheren Anteilen an Bisphenol-A-Rückständen als 50 % im Bindemittelgemisch nimmt der Hydratationsschutz und der Festigkeitsabfall deutlich stärker ab als bei den reinen niedrigschmelzenden Novolaken.

Vergleichsweise ergeben Kombinationen von DMT-Esterpech ( = Rückstände aus der Dimethylterephthalat-Produktion) oder hydrophobierenden Produkten wie Tallöl-Destillat oder Tallöl-Pech (z. B. Unitol P = Rückstand aus der Tallölverarbeitung) unter vergleichbaren Verarbeitungsbedingungen mit den niedrigschmelzenden Novolaken ein überraschend niedrigeres Festigkeitsniveau mit wesentlich schlechterem Hydratationsschutz und deutlich kürzeren Lagerzeiten.

Zudem ist die Qualmentwicklung bei Pyrolysevorgängen aus den erfindungsgemäßen Bindemitteln deutlich geringer als bei der Kombination von Rückständen aus der Dimethylterephthalat-Herstellung mit Phenol-Novolaken.

Aufgrund ihres Eigenschaftsprofils lassen sich die erfindungsgemäßen Bindemittel ohne weiteres bereits bei etwa 80 bis 90 °C mit den übrigen Komponenten der hochtemperaturbeständigen Formstoffe vermischen. Zur Aushärtung der so hergestellten Formstoffmischung kann 1 bis 20 vorzugsweise 5 bis 15 % Hexamethylentetramin bezogen auf das Gewicht des eingesetzten Bindemittels zugesetzt werden.Nach dem Verpressen zu Formkörpern und dem Abkühlen erzielt man eine sehr gute Grünstandfestigkeit dieser Formkörper.

Hochtemperaturbeständige Formstoffe und Kohlenstoffwerkstoffe mit zufriedenstellenden Eigenschaften werden erhalten, wenn im erfindungsgemäßen Bindemittel mindestens 10 % Novolak enthalten sind. Vorzugsweise werden in den erfindungsgemäßen Massen Bindemittel eingesetzt mit einem 1 : 1 Mischungsverhältnis von Novolak und Bisphenol-A-Rückstand.

Einsetzbar im Bindemittel sind Mischungen aus Novolak und Bisphenol-A-Rückstand im Verhältnis von 1 : 9 bis 9 : 1. Bevorzugt wird jedoch mit Mischungsverhältnissen von 2 : 3 bis 3 : 2 gearbeitet.

Mit den erfindungsgemäßen Bindemitteln hergestellte Feuerfestmassen zeigen eine gute Lagerstabilität und lassen sich aufgrund der hohen Kantenbruchfestigkeit gut verarbeiten.

Sie zeigen in der praktischen Anwendung eine hohe Kohlenstoffausbeute und lassen sich ohne Schwierigkeiten verarbeiten.

Überraschenderweise wurde gefunden, daß sich die Schlackenbeständigkeit wesentlich verbessert, wenn die erfindungsgemäßen Bindemittel zusätzlich 5 bis 25 Gew.-% eines Pulverharzes enthalten.

Diese speziellen Pulverharze erheben außer einer Verbesserung der Schlackenbeständigkeit eine Erhöhung der Kohlenstoffsausbeute des Bindemittelgemisches.

Die Herstellung dieser Pulverharze erfolgt entweder in gleicher Weise wie bei den niedrigschmelzenden Novolaken durch Einschmelzen der Bisphenol-A-Rückstände in den Novolaken mit einem Molverhältnis von Phenol : Formaldehyd zwischen 1 : 0,55 bis 1 : 0,90, und zwar in einem Verhältnis von Bisphenol-A-Rückstand : Novolak von 3 : 7 bis 7 : 3 oder sie erfolgt durch Kondensation der Reaktionspartner unter sauren Bedingungen, wobei das Verhältnis Phenol : Bisphenol-A-Rückstand im Bereich von 10 : 1 bis 1 : 2,5 Gew.-% gewählt werden kann und das molare Verhältnis Phenol : Formaldehyd wieder zwischen 1 : 0,55 bis 1 : 0,9 liegt.

Die Pulverharze können bis zu 20 Gew.-% Hexamethylentetramin enthalten.

Die erfindungsgemäßen hochtemperaturbeständigen Formstoffe enthalten nebem dem Bindemittel die üblichen Füll- und Zusatzstoffe in den üblicherweise eingesetzten Mengen.

Beispiele für Füllstoffe für feuerfeste Erzeugnisse, die einzeln oder kombiniert eingesetzt werden können, sind Sand, Korunde, Bauxite, Zirkoniumerden, Chromite, Magnesite, Dolomite, Boride, aber auch Kohlenstoff, wie Ruß, Koks und Graphit.

Vorteilhaft bei der Anwendung der erfindungsgemäßen Bindemittel für die Herstellung von heißgepreßten Schleifscheiben ist die Möglichkeit, durch das Warmmischen ein rieselfähiges, staubfreies, lagerstabiles Granulat zu erzeugen, welches durch Heißpressen verarbeitet wird.

Bei der Reibbelagsherstellung können durch Warmmischverfahren unter Verwendung der erfindungsgemäßen hochtemperaturbeständigen Formstoffe die Vorteile der herkömmlichen Reibbelagsmassen-Aufbereitung durch Trockenmischverfahren und Naßverfahren vereint werden, d. h. hohe Imprägnierfähigkeit der Faserbestandteile und der übrigen Zuschlagstoffe sowie Lösemittel- und Wasserfreiheit.

Füllstoffe für Schleifscheiben sind Korunde und Siliciumcarbid, Zusatzstoffe sind Kryolith, Pyrite, Fluorborate, Zinksulfid, Antimonoxid u. a.

Für Reibbeläge werden als Fasermaterial beispielsweise eingesetzt: Diabasfasern, Basalt-, Keramik-, Aramid-, Glas-, Kohlenstoff- und Metallfasern. Weitere Zuschlagstoffe sind: Ruße, Graphit, Kaolin, Baryth, Metalloxide, Schiefermehr, Sulfide und Metalle in Form von Pulver und Spänen.

**Beispiele**

Beispiel 1

9,4 kg Phenol werden mit 94 g Oxalsäure versetzt und auf 100 °C erhitzt. Unter Rühren und Rückfluß werden in einem Zeitraum von 3 h gleichmäßig 2,6 kg Formalin 45 %ig zulaufen lassen. Nach Beendigung der Zugabe wird die Reaktionsmischung bis zu einem Gehalt an freiem Formaldehyd von < 0,5 % unter Rückfluß erhitzt und danach durch Destillation von Wasser und Monomerbestandteilen Phenol und Formaldehyd befreit.

Der so erhaltene Novolak ist charakterisiert durch die Schmelzviskosität in mPa•s.

nach DIN 53229 (Platte/Kegel)     bei 75 °C = 32.000

bei 100 °C = 1.250
bei 125 °C = 190

## Beispiel 2

2,0 kg des Novolaks gemäß Beispiel 1 werden bei 130 °C mit 0,5 Rückständen aus der Synthese von Bisphenol-A, erhalten durch mit HCl katalysierte Kondensation von 2 Mol Phenol und 1 Mol Aceton mit anschließender destillativer Abtrennung des Bisphenol-A (Bisphenol-A-Rückstand), in der Schmelze homogenisiert und dann abgekühlt.

Das so erhaltene Bindemittelgemisch ist charakterisiert durch die Schmelzviskosität in mPa•s.

nach DIN 53229 (Platte/Kegel)  bei 75 °C = 21.500
bei 100 °C = 580
bei 125 °C = 70

## Beispiel 3

2,0 kg des Novolaks gemäß Beispiel 1 werden bei 130 °C mit 2,0 kg Bisphenol-A-Rückstand in der Schmelze homogenisiert und dann abgekühlt.

Das so erhaltene Produkt ist charakterisiert durch die Schmelzviskosität in mPa•s.

nach DIN 53229 (Platte/Kegel)  bei 75 °C = 20.000
bei 100 °C = 550
bei 125 °C = 50

## Beispiel 4

2,0 kg des Novolaks gemäß Beispiel 1 werden bei 150 °C mit 2,0 kg Bisphenol-A-Rückstand in der Schmelze homogenisiert und anschließend niederflüchtige Bestandteile durch Vakuum-Destillation bis zu einer Temperatur von 160 °C entfernt.

Das so erhalten Produkt ist charakterisiert durch die Schmelzviskosität in mPa•s.

nach DIN 53229 (Platte/Kegel)  bei 75 °C = 31.000
bei 100 °C = 820
bei 125 °C = 110

## Beispiel 5

0,5 kg des Novolaks gemäß Beispiel 1 werden bei 130 °C mit 2,0 kg Bisphenol-A-Rückstand in der Schmelze homogenisiert und dann abgekühlt.

Das so erhalten Produkt ist charakterisiert durch die Schmelzviskosität in mPa•s.

nach DIN 53229 (Platte/Kegel)  bei 75 °C = 14.800
bei 100 °C = 350
bei 125 °C = 30

## Beispiel 6 (Vergleichsbeispiel)

2,0 kg des Novolaks gemäß Beispiel 1 werden bei 130 °C mit 2,0 kg DMP-Esterpech (= Rückstand aus der Dimethylterephthalat-Produktion) bei 150 °C in der Schmelze homogenisiert und dann abgekühlt.

Das so erhalten Produkt ist charakterisiert durch die Schmelzviskosität in mPa•s.

nach DIN 53229 (Platte/Kegel)  bei 75 °C = 250.000
bei 100 °C = 4.500
bei 125 °C = 420

## Beispiel 7

Zu 1,4 kg eines Novolaks gemäß Beispiel 1 werden bei 150 °C 0,6 kg Bisphenol-A-Rückstand in der Schmelze zugesetzt und homogenisiert. Leichter flüchtige Bestandteile werden durch Vakuum-Destillation bis zu einer Temperatur von 170 °C entfernt. Das Produkt wird ausgetragen und nach dem Erkalten mit 10 % Hexamethylentetramin zu einem Pulverharz vermahlen, das wie folgt charachterisiert ist:

| Schmelzintervall in °C nach DIN 53781 | ca. 95 |
|---|---|
| Fließstrecke bei 125 °C nach DIN 16916-02-A | 70 mm |
| Hexagehalt | 9,0% |
| Siebanalyse 45 $\mu$ nach DIN 53734 | 10,0 % |

Beispiele 8 bis 13

Die in der Tabelle angegebenen Mengen Dolomit, Körnung 0,3 bis 3,0 mm, werden in einem Mischaggregat auf 90 °C aufgeheizt. Danach wird die jeweils angegebende Menge an Bindemittelgemisch bzw. Novolak mit einer Temperatur von ca. 130 °C homogen in der Mischung verteilt und anschließend bei einer Temperatur von 85 bis 90 °C das Härtungsmittel Hexamethylentetramin mit 10 % bezogen auf das Bindemittel nachgemischt.

Die fertigen Mischungen werden direkt bei 80 °C verpreßt zu Prüfkörperabmessungen von 140 x 20 x 22 mm und anschließend innerhalb von 5 h auf 180 °C erhitzt und danach 2 h bei dieser Temperatur gehalten und so ausgehärtet.

Die so erhaltenen Prüfkörper werden in verschiedenen Zeitabständen auf ihre Biegefestigkeit (nach DIN 53452) geprüft.

Die erhaltenen Ergebnisse finden sich in der Tabelle.

Beispiele 14 bis 15

Die in der Tabelle angegebenen Mengen Dolomit, Körnung 0,3 bis 3,0 mm, werden in einem Mischaggregat auf 90 °C aufgeheizt. Dann wird die jeweils angegebende Menge an Phenolnovolak gemäß Beispiel 1 mit einer Temperatur von ca. 130 °C homogen in der Mischung verteilt und anschließend bei gleicher Temperatur als zweite Komponente Tallöl-Destillat bzw. Unitol ® P ( = Tallöl-Pech als komplexes Gemisch von unverseifbaren und hochsiedenden Estern, Fett- und Harzsäuren Herstellung: Union Camplchemicals I.K. Ltd.) nachgemischt. Zum Schlug wird das Härtungsmittel Hexamethylentetramin mit 10 % bezogen auf das Bindemittel nachgemischt.

Die fertigen Mischungen werden direkt bei 80 °C verpreßt zu Prüfkörperabmessungen von 140 x 20 x 22 mm und anschließend innerhalb von 5 h auf 180 °C erhitzt und danach 2 h bei dieser Temperatur gehalten und so ausgehärtet.

Die so erhaltenen Prüfkörper werden in verschiedenen Zeitabständen auf ihre Biegefestigkeit (nach DIN 53452) geprüft.

Die erhaltenen Ergebnisse finden sich in der Tabelle.

Tabelle   Festigkeitswerte an Dolomitstäben in Abhängigkeit von Bindemittelgemisch und Lagerzeit

| Beispiel-Nr. | 8 | 9 | 10 | 11 | 12 | 13 | 14 | 15 |
|---|---|---|---|---|---|---|---|---|
| Dolomit, Körnung 0,3 bis 3,0 mm | 5.000 g | 5.000 g | 5.000 g | 5.000 g | 5.000 g | 5.000 g | 5.000 g | 5.000 g |
| Bindemittelgemisch entspr. Beispiel: | 250 g / 2 | 200 g / 3 | 200 g / 5 | 250 g / 1 | 200 g / 1 | 200 g / 6 | 200 g / 1 | 200 g / 1 |
| Phenolnovolak enspr. Beispiel: | - - - / - | - - - / - | - - - / - | - - / - | - - - / - | - - - / - | - - - / - | - / - |
| Tallöl-Destillat | - | - | - | - | - | - | 50 g | - |
| Unitol® P | - | - | - | - | - | - | - | 50 g |
| Hexamethylentetramin | 25 g | 20 g | 20 g | 25 g | 20 g | 20 g | 25 g | 25 g |
| Biegefestigkeit (N/cmm²) sofort nach Härtung | 33,3 | 29,9 | 27,9 | 30,7 | 28,5 | 9,7 | 5,1 | 6,1 |
| nach 7 Tagen | 38,5 | 27,8 | 21,0 | 37,1 | 31,9 | 7,1 | 3,0 | 4,6 |
| nach 14 Tagen | - - - | 17,2 | 12,0 | - - - | - - - | 4,5 | 1,1 | 1,4 |
| nach 16 Tagen | 25,8 | - - | - - | 30,0 | 21,8 | - - | - - | - - |
| nach 21 Tagen | 12,8 | 6,6 | 4,1 | - - - | - - - | - - | - - | - - |
| nach 23 Tagen | - - - | - - | - - | 16,7 | 16,5 | - - - | - - - | - - - |

8

Beispiel 16

600 g Korund, Körnung 46, werden in einem Intensivmischer auf 140 °C aufgeheizt und mit 26,5 g einer Harzschmelze gemäß Beispiel 4, die auf 120 °C aufgeheizt wurde, intensiv vermischt. Der Mischvorgang dauert 3 min.

Diese Masse wird auf 90 °C abgekühlt und mit einer Mischung aus

45,0 g Pulverharz gemäß Beispiel 7
3,5 g Hexamethylentetramin
9,0 g Calciumoxid
37,5 g Kryolith

versetzt und weitere 30 bis 60 sek bei 90 °C gemischt, anschließend auf Raumtemperatur abgekühlt.

Von der Mischung werden Prüfkörper 140 x 20 x 22 mm durch Heißverpressung 3 min bei 170 °C hergestellt, die anschließend 2 h bei 180 °C nachgehärtet werden.

Die Biegefestigkeit dieser Prüfkörper liegt bei 90 N/mm$^2$.

Entsprechende Prüfkörper mit reinem Novolak gemäß Beispiel 1 anstelle der Mischung gemäß Beispiel 4 haben eine Biegefestigkeit von 93 N/mm$^2$.

Beispiel 17

1,0 kg des erfindungsgemäßen Bindemittels gemäß Beispiel 4 wird auf 120 °C aufgeheizt und zu einer auf 100 °C aufgeheizten Mischung gegeben aus:

3,0 kg Stahlwolle
1,5 kg Messingspäne
1,0 kg Koksgranulat
0,5 kg Graphit
0,5 kg Polyamidfaser (2 mm)
1,5 kg Bariumsulfat und
0,2 kg Magnesiumoxid

Diese Komponenten werden mit dem Bindemittel in einem Intensivmischer ca. 5 min gemischt. Dann gibt man zu der Mischung bei 80 °C 0,2 kg einer 50 %igen wäßrigen Hexamethylentetramin-Lösung und mischt unter Kühlung weitere 3 min.

Die abgekühlte Mischung wird zu Reibbelägen heißverspreßt mit einer Preßzeit von 30 sek/pro mm Schichtdicke bei 170 °C und einer Nachhärtung von 10 h bis 200 °C.

Die Prüfung des Reibwertes ergibt einen Wert von 0,35.

Der Reibwert einer entsprechenden Mischung mit Novolak gemäß Beispiel 1 anstelle der Mischung gemäß Beispiel 4 ergibt einen Wert von 0,4.

**Patentansprüche**

1. Kohlenstoffbildendes Bindemittelgemisch zur Herstellung hochtemperaturbeständiger Formstoffe, **dadurch gekennzeichnet**, daß es ein Gemisch aus Phenolharz und harzartigen Rückständen aus der Bisphenol-A-Herstellung enthält.

2. Bindemittelgemisch gemäß Anspruch 1, **dadurch gekennzeichnet**, daß es mindestens 10 Gew.-% Phenolharz enthält.

3. Bindemittelgemisch gemäß den Ansprüchen 1 und 2, **dadurch gekennzeichnet**, daß darin Bisphenol-A-Rückstand und Phenolharz in Mischungsverhältnissen von 1 : 9 bis 9 : 1 enthalten sind.

4. Bindemittelgemisch gemäß den Ansprüchen 1 bis 2, **dadurch gekennzeichnet**, daß darin Bisphenol-A-Rückstand und Phenolharz in Mischungsverhältnissen von 2 : 3 bis 3 : 2 enthalten sind.

5. Bindemittelgemisch gemäß den Ansprüchen 1 bis 2, **dadurch gekennzeichnet**, daß darin Bisphenol-A-Rückstand und Phenolharz in einem Mischungsverhältnis von 1 : 1 enthalten sind.

6. Bindemittelgemisch gemäß den Ansprüchen 1 bis 5, **dadurch gekennzeichnet**, daß als Phenolharz ein Novolak eingesetzt wird, dessen molares Phenol : Formaldehydverhältnis 1 : 0,2 bis 1 : 0,55 beträgt.

**7.** Bindemittelgemisch nach Anspruch 6, **dadurch gekennzeichnet**, daß es als zusätzliches Harz ein Pulverharz enthält.

**8.** Bindemittelgemisch nach Anspruch 7, **dadurch gekennzeichnet**, daß das Pulverharz ein Novolakharz ist.

**9.** Bindemittelgemisch nach Anspruch 7 und 8, **dadurch gekennzeichnet**, daß das Pulverharz ein Kondensationprodukt aus Bisphenol-A-Rückständen, Phenol und einem Aldehyd ist.

**10.** Pulverharz, hergestellt durch Kondensation von Phenol, Bisphenol-A-Rückständen und Formaldehyd unter sauren Bedingungen.

**11.** Bindemittelgemisch gemäß den Ansprüchen 1 bis 9, **dadurch gekennzeichnet**, daß 1 bis 20 Gew.-% eines Härters enthält.

**12.** Bindemittelgemisch nach dem Anspruch 11, **dadurch gekennzeichnet**, daß es als Härter Hexamethylentetramin enthält.

**13.** Bindemittelgemisch zur Herstellung hochtemperaturbeständiger Formstoffe gemäß den Ansprüchen 1 bis 6, **dadurch gekennzeichnet**, daß es einen Schmelzpunkt im Bereich von 30 bis 55 °C besitzt.

**14.** Bindemittelgemisch gemäß den Ansprüchen 1 bis 6, **dadurch gekennzeichnet**, daß es bei einer Temperatur von 100 °C in der Schmelze eine Viskosität im Bereich von 300 bis 5.000 mPa•s hat.

**15.** Verwendung der Bindemittelgemische nach den Ansprüchen 1 bis 14 zur Herstellung von ungeformten Feuerfestmassen.

**16.** Verwendung der Bindemittelgemische nach den Ansprüchen 1 bis 14 zur Herstellung von geformten Feuerfestmassen.

**17.** Verwendung der Bindemittelgemische nach den Ansprüchen 1 bis 14 zur Herstellung von Kohlenstoffwerkstoffen.

**18.** Verwendung der Bindemittelgemische nach den Ansprüchen 1 bis 14 zur Herstellung von Schleifscheiben.

**19.** Verwendung der Bindemittelgemische nach den Ansprüchen 1 bis 14 zur Herstellung von Reibbelägen.

**Claims**

**1.** A carbon-forming binding agent mixture for producing high-temperature-resistant moulded materials, characterised in that it contains a mixture of phenolic resin and resinous residues from the preparation of bisphenol-A.

**2.** A binding agent mixture according to Claim 1, characterised in that it contains at least 10% by weight of phenolic resin.

**3.** A binding agent mixture according to Claims 1 and 2, characterised in that it contains bisphenol-A residue and phenolic resin in mixture ratios of from 1 : 9 to 9 : 1.

**4.** A binding agent mixture according to Claims 1 to 2, characterised in that it contains bisphenol-A residue and phenolic resin in mixture ratios of from 2 : 3 to 3 : 2.

**5.** A binding agent mixture according to Claims 1 to 2, characterised in that it contains bisphenol-A residue and phenolic resin in a mixture ratio of 1 : 1.

**6.** A binding agent mixture according to Claims 1 to 5, characterised in that the phenolic resin used is a novalak of which the molar phenol:formaldehyde ratio ranges from 1 : 0.2 to 1 : 0.55.

7. A binding agent mixture according to Claim 6, characterised in that it contains a powdered resin as an additional resin.

8. A binding agent mixture according to Claim 7, characterised in that the powdered resin is a novalak resin.

9. A binding agent mixture according to Claims 7 and 8, characterised in that the powdered resin is a condensation product of bisphenol-A residues, phenol and an aldehyde.

10. A powdered resin, prepared by condensing phenol, bisphenol-A residues and formaldehyde under acidic conditions.

11. A binding agent mixture according to Claims 1 to 9, characterised in that [it] contains 1-20% by weight of a curing agent.

12. A binding agent mixture according to Claim 11, characterised in that it contains hexamethylenetetramine as a curing agent.

13. A binding agent mixture for producing high-temperature-resistant moulded materials according to Claims 1 to 6, characterised in that its melting point lies between 30 and 55 °C.

14. A binding agent mixture according to Claims 1 to 6, characterised in that it has a viscosity in the range of from between 300 to 5000 mPa•s at a temperature of 100 °C in the melt.

15. Use of the binding agent mixture according to Claims 1 to 14 for producing unmoulded fire-resistant material.

16. Use of the binding agent mixture according to Claims 1 to 14 for producing moulded fire-resistant material.

17. Use of the binding agent mixture according to Claims 1 to 14 for producing carbon materials.

18. Use of the binding agent mixture according to Claims 1 to 14 for producing grinding wheels.

19. Use of the binding agent mixture according to Claims 1 to 14 for producing abrasive coatings.

**Revendications**

1. Mélange de liants formateur de carbone pour la préparation de matières à mouler résistant aux hautes températures, caractérisé en ce qu'il contient un mélange de résine phénolique et de résidus résineux issus de la fabrication du bisphénol A.

2. Mélange de liants selon la revendication 1, caractérisé en ce qu'il contient au moins 10% en poids de résine phénolique.

3. Mélange de liants selon les revendications 1 et 2, caractérisé en ce que le résidu de bisphénol A et la résine phénolique y sont présents dans des rapports de mélange de 1:9 à 9:1.

4. Mélange de liants selon les revendications 1 et 2, caractérisé en ce que le résidu de bisphénol A et la résine phénolique y sont présents dans des rapports de mélange de 2:3 à 3:2.

5. Mélange de liants selon les revendications 1 et 2, caractérisé en ce crue le résidu de bisphénol A et la résine phénolique y sont présents dans un rapport de mélange de 1:1.

6. Mélange de liants selon les revendications 1 à 5, caractérisé en ce qu'on met en oeuvre en tant crue résine phénolique une novolaque dont le rapport molaire de phénol:formaldéhyde se situe entre 1:0,2 et 1:0,55.

**7.** Mélange de liants selon la revendication 6, caractérisé en ce qu'il contient en tant que résine additionnelle une résine en poudre.

**8.** Mélange de liants selon la revendication 7, caractérisé en ce que la résine en poudre est une novolaque.

**9.** Mélange de liants selon les revendications 7 et 8, caractérisé en ce que la résine en poudre est un produit de condensation obtenu à partir de résidus de bisphénol A, de phénol et d'un aldéhyde.

**10.** Résine en poudre, préparée par condensation de phénol, de résidus de bisphénol A et de formaldéhyde dans des conditions acides.

**11.** Mélange de liants selon les revendications 1 à 9, caractérisé en ce qu'il contient 1 à 20% en poids d'un durcisseur.

**12.** Mélange de liants selon la revendication 11, caractérisé en ce qu'il contient de l'hexaméthylènetétramine en tant que durcisseur.

**13.** Mélange de liants pour la préparation de matières à mouler résistant aux hautes températures selon les revendications 1 à 6, caractérisé en ce qu'il possède un point de fusion dans l'intervalle de 30 à 55°C.

**14.** Mélange de liants selon les revendications 1 à 6, caractérisé en ce qu'il possède, à une température de 100°C dans la masse fondue, une viscosité dans la gamme de 300 à 5.000 mPa•s.

**15.** Utilisation des mélanges de liants selon les revendications 1 à 14 pour la fabrication de produits réfractaires non façonnés.

**16.** Utilisation des mélanges de liants selon les revendications 1 à 14 pour la fabrication de produits réfractaires façonnés.

**17.** Utilisation des mélanges de liants selon les revendications 1 à 14 pour la fabrication de matériaaux en carbone.

**18.** Utilisation des mélanges de liants selon les revendications 1 à 14 pour la fabrication de disques abrasifs.

**19.** Utilisation des mélanges de liants selon les revendications 1 à 14 pour la fabrication de garnitures de friction.